# EUROPÄISCHE PATENTSCHRIFT

(11) **EP 0 772 968 B1**
(45) Veröffentlichungstag und Bekanntmachung des Hinweises auf die Patenterteilung: **09.01.2002**
(21) Anmeldenummer: 96116565.1
(22) Anmeldetag: 16.10.1996
(51) Int. Cl.: A01D 75/20, A01D 78/10

(54) **Anordnung von Schutzbügeln für Vielkreiselheuwender**
Safety bow for rotary tedder having several rotors
Anneau de protection pour faneuse rotative avec plusieurs rotors

(30) Priorität: 08.11.1995 DE 19541654
(43) Veröffentlichungstag der Anmeldung: 14.05.1997
(73) Patentinhaber: CLAAS SAULGAU GMBH, D-88340 Saulgau (DE)
(72) Erfinder: Deni, Franz, 88348 Saulgau-Bogenweiler (DE)

(56) Entgegenhaltungen:
- EP-A- 0 083 460
- EP-A- 0 391 093
- EP-A- 0 454 602
- EP-A- 0 541 516
- DE-A- 4 128 501
- DE-U- 8 712 165
- DE-U- 8 807 510
- DE-U- 9 409 143

## Beschreibung

Die Erfindung bezieht sich auf eine Anordnung von Schutzbügeln an den Zinkenkreiseln für Vielkreiselheuwender nach dem Oberbegriff des Patentanspruches 1.

Bei den bekannten Vielkreiselheuwendern sind in der Arbeitsstellung vor den einzelnen Zinkenkreiseln zur Unfallvermeidung Schutzbügel in verschiedenen Ausführungen angeordnet.

Bei dem in der DE 41 28 501 A1 dargestellten Kreiselheuwender werden die Schutzbügel der seitlichen und äußeren Zinkenkreisel in der Transportstellung gemeinsam mit den Zinkenkreiseln nach oben verschwenkt.

Die Zinkenkreisel und die zugehörigen Schutzbügel eines Heuwendes nach der EP 0 391 093 B1 werden in des Transportstellung nach hinten und nach oben geschwenkt.

Da sich bei beiden Ausführungen die Schutzbügel an den Außenseiten befinden, erfolgt beim Schwenkvorgang keine Berührung mit den Rahmenteilen der Maschine.

Bei Kreiselwendern hingegen, deren seitliche Zinkenkreisel in der Transportstellung nach vorn geschwenkt werden (DE-Patentanmeldung 195 25 344.2), ist der erforderliche Abstand zwischen dem Längsträger der Maschine und den Schutzbügeln nicht in ausreichendem Maß vorhanden, so daß die Schutzbügel in der Transportstellung mit dem Längsträger kollidieren.

Der Erfindung liegt die Aufgabe zugrunde, die Schutzbügel so anzuordnen, bzw. sie in eine solche Schwenklage zu bringen, daß sie bei der Umstellung des Kreiselheuwenders von der Arbeits- in die Transportstellung, ohne Demontagearbeiten durchführen zu müssen, weder mit dem Maschinenrahmen noch mit den anderen Schutzbügeln kollidieren.

Erfindungsgemäß wird dies durch die kennzeichnenden Merkmale des Patentansprüchs 1 gelöst.

Vorteilhafte Weiterbildungen des Erfindung sind in den abhängigen Ansprüchen dargestellt.

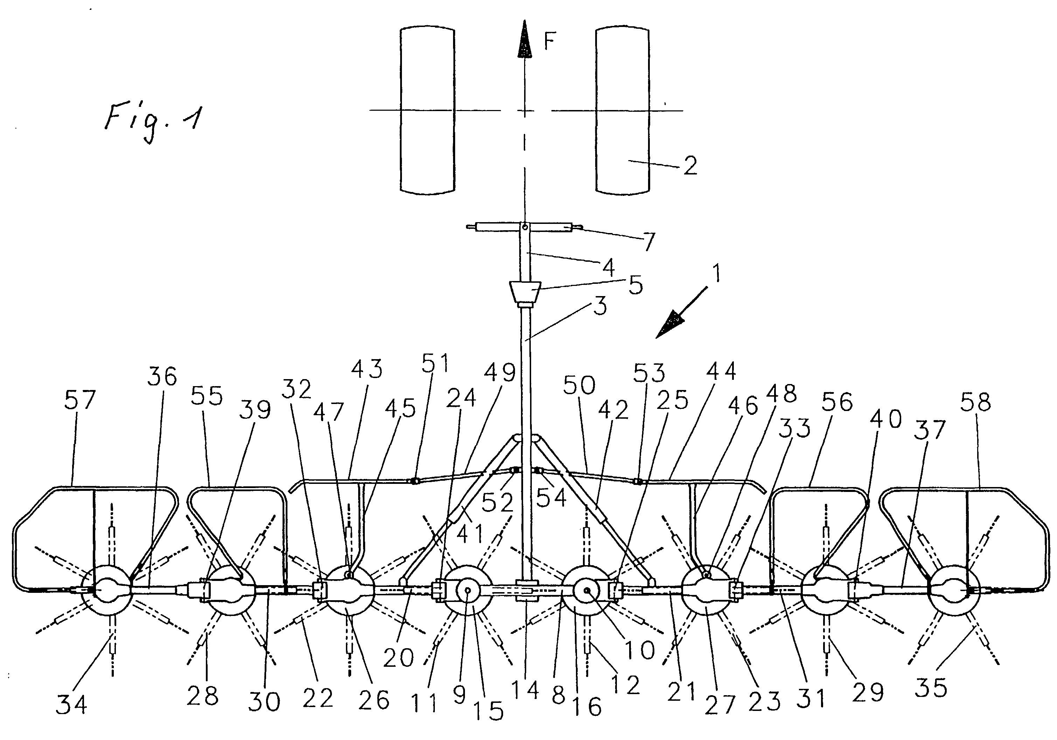

Die Erfindung wird nachstehend an einem Ausführungsbeispiel näher erläutert. In der zugehörigen Zeichnung zeigen
- Fig. 1: die Draufsicht auf einen Kreiselheuwender mit 8 Zinkenkreiseln und den Schutzbügeln in der Arbeitsstellung,

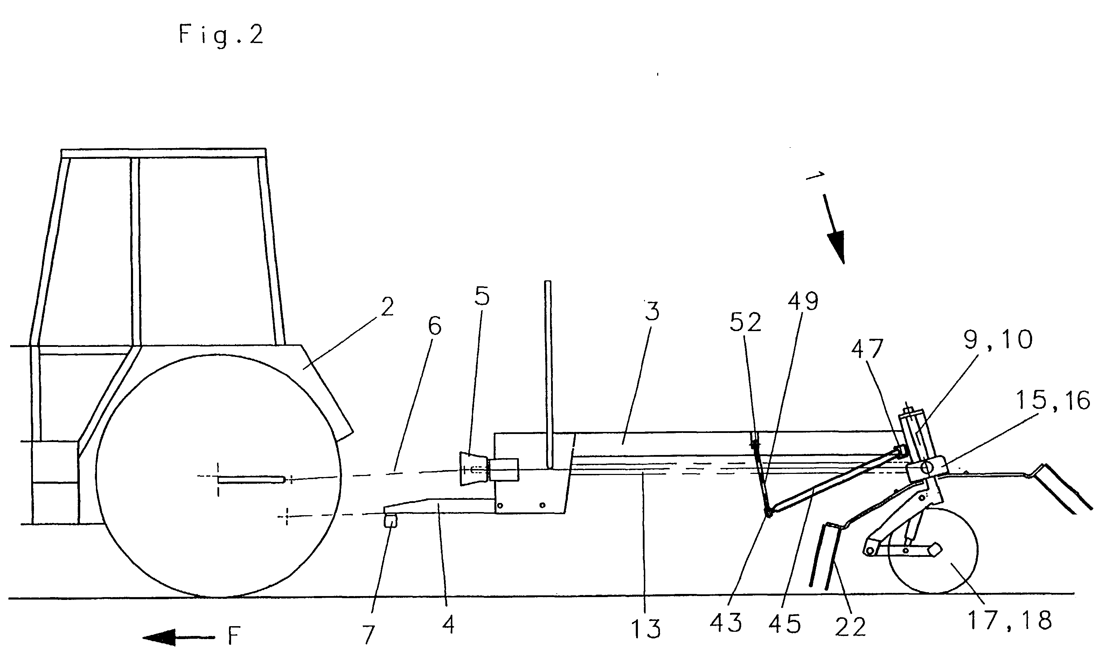

- Fig. 2: eine Seitenansicht nach Fig. 1,

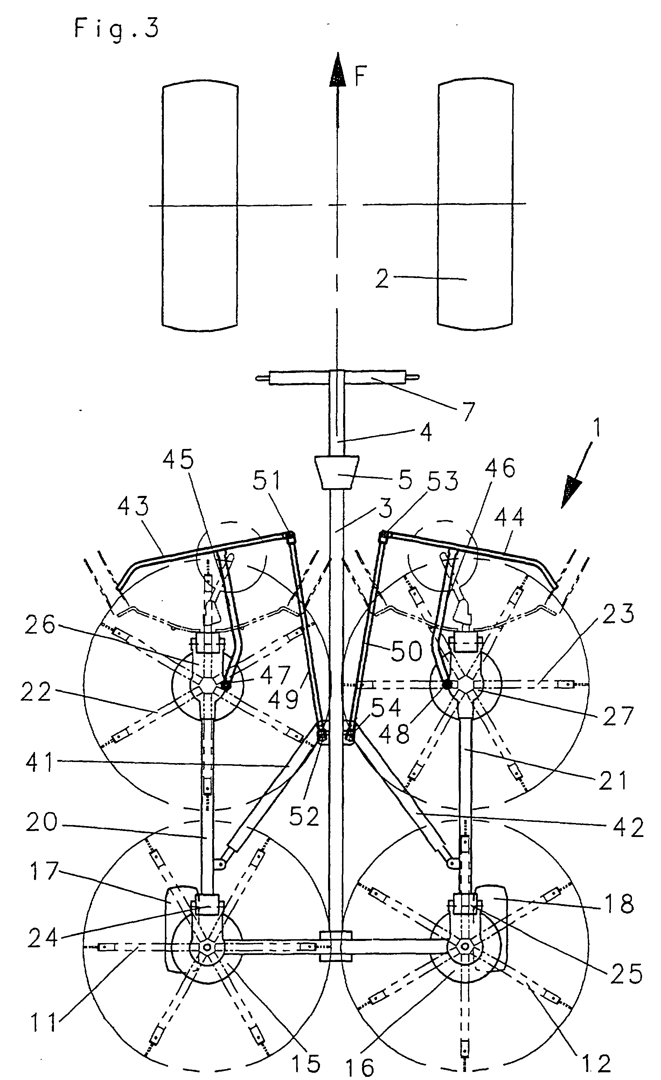

- Fig. 3: die Draufsicht auf einen Kreiselheuwender mit geschwenkten Zinkenkreiseln und Schutzbügeln in der Transportstellung,

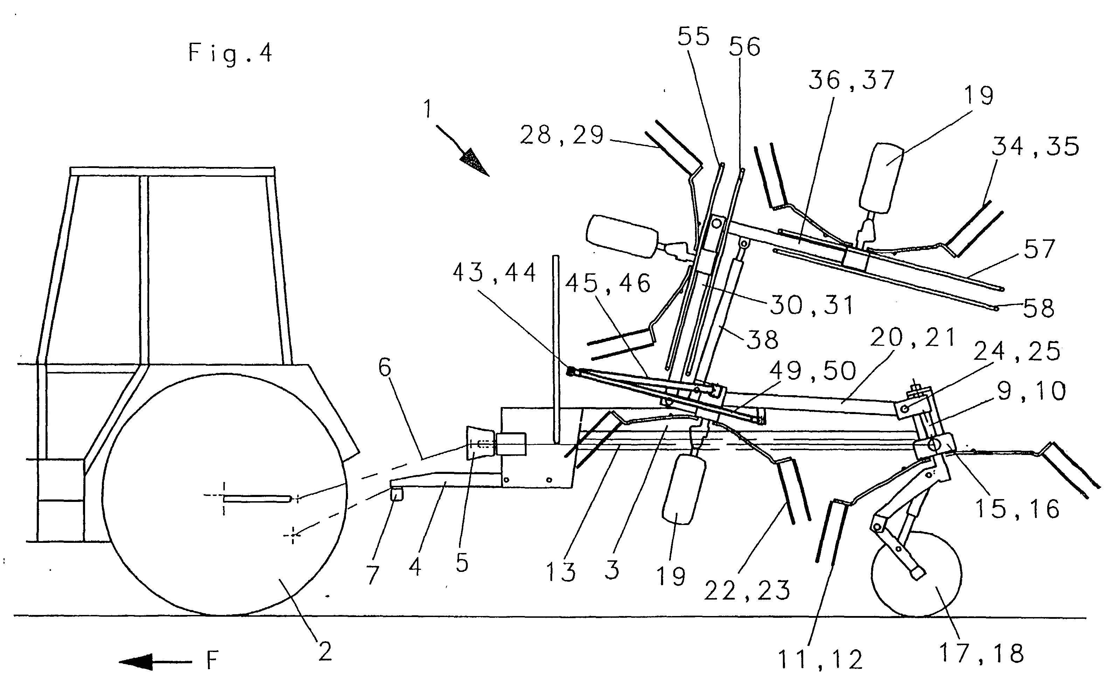

- Fig. 4: eine Seitenansicht nach Fig. 3.

Ein in der Zeichnung dargestellter Kreiselheuwender (1) mit acht an Tragarmen angeordneten Zinkenkreiseln wird von einem Traktor (2) gezogen und angetrieben. An einem in Fahrtrichtung (F) verlaufenden starren Längsträger (3) ist an der Vorderseite eine Zugdeichsel (4) und ein Anschluß (5) für eine Gelenkwelle (6) zum Getriebe des Traktors (2) angeordnet. Die Zugdeichsel (4) ist mit der Zweipunktanhängung (7) des Traktors (2) verbunden. Am hinteren Ende des Längsträgers (3) ist ein Querträger (8) angeordnet. An den Querträger (8) schließen sich beidseitig mehrere um etwa vertikale Schwenkachsen (9, 10) nach vorn schwenkbare Tragarme mit daran angeordneten Zinkenkreiseln an. Am Querträger (8) sind zwei mittlere Zinkenkreisel (11, 12) und an den einzelnen Tragarmen ist jeweils ein Zinkenkreisel angeordnet. Der Antrieb der einzelnen Zinkenkreisel erfolgt vom Traktor (2) aus über die Gelenkwelle (6). Von dieser aus erfolgt die Weiterleitung der Drehbewegung über eine unterhalb des Längsträgers (3) angeordnete Antriebswelle (13) zum Eingangsgetriebe (14) am Querträger (8). An das Eingangsgetriebe (14) schließen sich beidseitig innerhalb des Querträgers (8) verlaufende Wellen an, die zu den Kreiselgetrieben (15, 16) der starr miteinander verbundenen mittleren Zinkenkreisel (11, 12) führen. Der Querträger (8) ist mit zwei höhenverstellbaren Transporträdern (17, 18) versehen, die unterhalb der Zinkenkreisel (11, 12) angebracht sind und die in der Arbeits- und Transportstellung ständig Bodenkontakt haben. Unterhalb der anderen Zinkenkreisel sind Tasträder (19) angeordnet. An den Querträger (8) schließen sich erste seitliche Tragarme (20, 21) an, an denen die ersten seitlichen Zinkenkreisel (22, 23) angeordnet sind. Die Tragarme (20, 21) sind um am Querträger (8) angebrachte horizontale Schwenkachsen (24, 25) nach oben und unten schwenkbar. Unterhalb der seitlichen Tragarme (20, 21) verlaufen Gelenkwellen, die die Drehbewegung von den Kreiselgetrieben (15, 16) der mittleren Zinkenkreisel (11, 12) zu den Kreiselgetrieben (26, 27) der ersten seitlichen Zinkenkreisel (22, 23) übertragen. An die ersten seitlichen Zinkenkreisel (22, 23) schließen sich die zweiten seitlichen Zinkenkreisel (28, 29) an, die an zweiten seitlichen Tragarmen (30, 31) befestigt und über horizontal angeordnete Schwenkachsen (32, 33) mit den Kreiselgetrieben (26, 27) der ersten seitlichen Zinkenkreisel (22, 23) antriebsmäßig verbunden sind. Die sich gelenkig daran anschließenden äußeren Zinkenkreisel (34, 35) sind an äußeren Tragarmen (36, 37) angebracht. Zwischen den ersten seitlichen Tragarmen (20, 21) und den äußeren Tragarmen (36, 37) sind Hydraulikzylinder (38) angeordnet, mit denen das Schwenken der äußeren Zinkenkreisel (34, 35) um die zugeordneten horizontalen Schwenkachsen (39, 40) und der zweiten seitlichen Zinkenkreisel (28, 29) um die Schwenkachsen (32, 33) erfolgt. Das Schwenken der seitlichen und äußeren Zinkenkreisel (22, 23, 28, 29, 34, 35) von der Arbeits- in die Transportstellung und umgekehrt erfolgt um die vertikalen Schwenkachsen (9, 10), die einen nach vorn gerichteten Neigungswinkel aufweisen. Zwischen dem Längsträger (3) und den ersten seitlichen Tragarmen (20, 21) sind einfachwirkende Hydraulikzylinder (41, 42) angeordnet. Durch sie werden die seitlichen und äußeren Zinkenkreisel (22, 23, 28, 29, 34, 35) von der Transportstellung in die Arbeitsstellung geschwenkt. Infolge der um etwa 15° nach vorn geneigten vertikalen Schwenkachsen (9, 10) schwenken die angehobenen seitlichen Zinkenkreisel (22, 23) nach dem Unterbrechen der Druckölzufuhr zu den Hydraulikzylindern (41, 42) selbstätig um etwa 90° nach vorn und gelangen dadurch in eine parallel zum Längsträger (3) verlaufende Transportstellung.

Aus Arbeitsschutzgründen sind in der Arbeitsstellung vor den rotierenden Zinkenkreiseln über die gesamte Arbeitsbreite Schutzbügel angeordnet, die in der Transportstellung in eine platzsparende Lage gebracht werden, in der sie den Schwenkvorgang nicht behindern und mit dem Längsträger (3) des Maschinenrahmens und mit den benachbarten Schutzbügeln nicht kollidieren.

Zu diesem Zweck sind, in Fahrtrichtung (F) gesehen, vor den ersten seitlichen Zinkenkreiseln (22, 23) Schutzbügel (43, 44) angeordnet, die an Haltearmen (45, 46) starr befestigt sind. Die Haltearme (45, 46) sind über vertikal angeordnete Gelenkachsen (47, 48) mit den Gehäusen der Kreiselgetriebe (26, 27) der ersten seitlichen Zinkenkreisel (22, 23) schwenkbeweglich verbunden. An den dem Längsträger (3) zugewandten Ende der Schutzbügel (43, 44) sind Koppelstangen (49, 50) angebracht, deren andere Enden am Längsträger (3) angelenkt sind. Die Verbindung der Enden der Koppelstangen (49, 50) mit den Schutzbügeln (43, 44) bzw. mit dem Längsträger (3) erfolgt über kardanisch ausgebildete Gelenke (51, 52, 53, 54). Diese Gelenkausführung ermöglicht die Höhen-, Längs- und Schrägverschiebungen der jeweiligen Anlenkstellen, die beim Anheben und Schwenken der seitlichen und äusseren Zinkenkreisel (22, 23, 28, 29, 34, 35) nach oben und vorn auftreten. In der Arbeitsstellung übernehmen die Koppelstangen (49, 50) gleichzeitig die Funktion von Schutzbügeln für die mittleren Zinkenkreisel (11, 12). Beim Schwenkvorgang der Zinkenkreisel von der Arbeits- in die Transportstellung gelangen die Schutzbügel (43, 44) und die zugehörigen Koppelstangen (49, 50) selbstätig in eine solche bauraumsparende Lage oberhalb und vor die Zinkenkreisel (22, 23), in der keine Berührung mit dem Längsträger (3) erfolgt. Auf diese Weise können die seitlichen Zinkenkreisel (22, 23) bis nahe an den Längsträger (3) in eine etwa parallele Lage zu diesem geschwenkt werden, wodurch sich eine geringe Transportbreite des Kreiselheuwenders (1) ergibt.

Eine weitere Möglichkeit zum Schwenken der Schutzbügel (43, 44) besteht darin, daß eine am Längsträger (3) angelenkte Steuerstange um eine horizontal angeordnete Schwenkachse nach oben geschwenkt wird. Die vertikale Schwenkachse der Schutzbügel (43, 44) muß in diesem Fall durch eine etwa horizontal verlaufende Schwenkachse ersetzt werden.

Den zweiten seitlichen Zinkenkreiseln (28, 29) sind fest mit diesen verbundene separate Schutzbügel (55, 56) zugeordnet. Um beim Schwenkvorgang der Zinkenkreisel (28, 29) eine gegenseitige Kollision der Schutzbügel (55, 56) zu vermeiden, sind diese höhenversetzt zueinander angeordnet.

An den äußeren Zinkenkreiseln (34, 35) sind äußere Schutzbügel (57, 58) angebracht, die starr mit den Zinkenkreiseln (34, 35) verbunden und zur Vermeidung einer Kollisionsgefahr beim Schwenken der Zinkenkreisel (34, 35) in die Transportstellung ebenfalls höhenversetzt zueinander angeordnet sind.

Die Vermeidung der gegenseitigen Berührung der seitlichen und äußeren Zinkenkreisel (28, 29, 34, 35) ist auch durch ein Hochschwenken beider Seiten um unterschiedliche Schwenkwinkel möglich.

## Patentansprüche

1. Anordnung von Schutzbügeln (43, 44, 55, 56, 57, 58) für Vielkreiselheuwender (1), die von einem Traktor (2) angetrieben werden und die von einer breiten Arbeitsstellung in eine schmale Transportstellung veränderbar sind und die einen etwa in Fahrtrichtung (F) verlaufenden Längsträger (3) und einen quer dazu angeordneten Querträger (8) aufweisen, an dem sich beidseitig mehrere schwenkbeweglich miteinander verbundene Tragarme (20, 21, 30, 31, 36, 37) anschließen, wobei am Querträger (8) und an den Tragarmen (20, 21, 30, 31, 36, 37) Zinkenkreisel (15, 16, 22, 23, 28, 29, 34, 35) angeordnet sind, die sich in der Arbeitsstellung nebeneinander befinden und vor denen zur Unfallvermeidung Schutzbügel (43, 44, 55, 56, 57, 58) angebracht sind, wobei die an den seitlichen Tragarmen(20, 21, 30, 31, 36, 37) angeordneten Zinkenkreisel (22, 23, 28, 29, 34, 35) von der Arbeitsstellung in die Transportstellung um am Querträger (8) angebrachte vertikale Schwenkachsen (9, 10) um etwa 90° nach vorn in die Transportstellung schwenkbar sind,
**dadurch gekennzeichnet,**
**daß** die den ersten seitlichen Zinkenkreiseln (22, 23) zugeordneten Schutzbügel (43, 44) beim Schwenken der Zinkenkreisel (22, 23) von der Arbeits- in die Transportstellung selbsttätig in eine Lage oberhalb und in Fahrtrichtung (F) vor die Zinkenkreisel (22, 23) schwenkbar sind.

2. Anordnung nach Anspruch 1, **dadurch gekennzeichnet, daß** die Schutzbügel (43, 44) an Haltearmen (45, 46) starr befestigt sind, wobei die Haltearme (45, 46) über vertikal angeordnete Gelenkachsen (47, 48) mit den Zinkenkreiseln (22, 23) schwenkbeweglich verbunden sind.

3. Anordnung nach Ansprüchen 1 und 2, **dadurch gekennzeichnet, daß** an den dem Längsträger (3) zugewandten Enden der Schutzbügel (43, 44) Koppelstangen (49, 50) angebracht sind, deren andere Enden am Längsträger (3) angelenkt sind.

4. Anordnung nach Anspruch 3, **dadurch gekennzeichnet, daß** die Koppelstangen (49, 50) mit den Schutzbügeln (43, 44) und dem Längsträger (3) über kardanisch ausgebildete Gelenke (51, 52, 53, 54) verbunden sind.

5. Anordnung nach Anspuch 1, **dadurch gekennzeichnet, daß** den zweiten seitlichen Zinkenkreiseln (28, 29) und den äußeren Zinkenkreiseln (34, 35) separate und starre Schutzbügel (55, 56 und 57, 58) zugeordnet sind, die zueinander höhenversetzt angeordnet sind.

6. Anordnung nach Anspruch 1, **dadurch gekennzeichnet, daß** die zweiten, seitlichen Zinkenkreisel (28, 29) und die äußeren Zinkenkreisel (34, 35) mit unterschiedlichen Schwenkwinkeln in eine Transportstellung hochschwenk- und festlegbar sind.

## Claims

1. An arrangement of guard hoops (43, 44, 55, 56, 57, 58) for multi-rotor hay tedders (1) which are driven by a tractor (2) and which are variable from a wide working position into a narrow transport position and which have a longitudinal bearer (3) extending substantially in the direction of travel (F) and a transverse bearer (8) which is arranged transversely with respect thereto and which is adjoined at both sides by a plurality of carrier arms (20, 21, 30, 31, 36, 37) which are pivotably movably connected together, wherein arranged on the transverse bearer (8) and on the carrier arms (20, 21, 30, 31, 36, 37) are tine rotors (15, 16, 22, 23, 28, 29, 34, 35) which are disposed in mutually juxtaposed relationship in the working position and in front of which are mounted guard hoops (43, 44, 55, 56, 57, 58) to avoid accidents, wherein the tine rotors (22, 23, 28, 29, 34, 35) arranged on the lateral carrier arms (20, 21, 30, 31, 36, 37) are pivotable from the working position into the transport position about vertical pivot axes (9, 10) mounted on the transverse bearer (8) through about 90° forwardly into the transport position, **characterised in that** the guard hoops (43, 44) associated with the first lateral tine rotors (22, 23), in the pivotal movement of the tine rotors (22, 23) from the working position into the transport position, are automatically pivotable into a position above the tine rotors (22, 23) and in front thereof in the direction of travel (F).

2. An arrangement according to claim 1 **characterised in that** the guard hoops (43, 44) are rigidly secured to holding arms (45, 46), wherein the holding arms (45, 46) are pivotably movably connected to the tine rotors (22, 23) by way of vertically arranged pivot axes (47, 48).

3. An arrangement according to claims 1 and 2 **characterised in that** mounted to the ends of the guard hoops (43, 44), which are towards the longitudinal bearer (3), are coupling bars (49, 50) whose other ends are pivotably mounted to the longitudinal bearer (3).

4. An arrangement according to claim 3 **characterised in that** the coupling bars (49, 50) are connected to the guard hoops (43, 44) and the longitudinal bearer (3) by way of universal joints (51, 52, 53, 54).

5. An arrangement according to claim 1 **characterised in that** associated with the second lateral tine rotors (28, 29) and the outer tine rotors (34, 35) are separate rigid guard hoops (55, 56 and 57, 58) which are arranged in mutually displaced relationship in respect of height.

6. An arrangement according to claim 1 **characterised in that** the second lateral tine rotors (28, 29) and the outer tine rotors (34, 35) can be pivoted upwardly into and fixed in a transport position at different pivot angles.

## Revendications

1. Système d'arceaux de protection (43, 44, 55, 56, 57, 58) pour une faneuse (1) à toupies multiples qui est entraînée par un tracteur (2), peut être amenée d'une position de travail déployée dans une position de transport étroite et comporte un longeron (3) qui s'étend sensiblement dans la direction de déplacement (F) et une poutre transversale (8) qui est disposée transversalement à la première et à laquelle se rattachent de chaque côté plusieurs bras-supports (20, 21, 30, 31, 36, 37) qui sont liés entre eux d'une manière articulée, des toupies à dents (15, 16, 22, 23, 28, 29, 34, 35) étant disposées sur la poutre transversale (8) et sur les bras-supports (20, 21, 30, 31, 36, 37), toupies qui, dans la position de travail, sont disposées les unes à côté des autres et devant lesquelles sont montés des arceaux de protection (43, 44, 55, 56, 57, 58) afin d'éviter les accidents, les toupies à dents (22, 23, 28, 29, 34, 35) montées sur les bras-supports (20, 21, 30, 31, 36, 37) latéraux pouvant pivoter d'environ 90° vers l'avant, de la position de travail dans la position de transport, autour d'axes de pivotement (9, 10) montés verticalement sur la poutre transversale (8), **caractérisé en ce que** les arceaux de protection (43, 44) associés aux premières toupies à dents (22,23) latérales peuvent pivoter automatiquement de la position de travail dans la position de transport, dans une position au-dessus et en avant des toupies à dents (22,23), vu dans la direction de déplacement.

2. Dispositif selon la revendication 1, **caractérisé en ce que** les arceaux de protection (43, 44) sont fixés rigidement à des bras-supports (45, 46), les bras-supports (45,46) étant reliés avec possibilité de pivotement aux toupies à dents (22,23) par l'intermédiaire d'axes d'articulation (47, 48) disposés verticalement.

3. Dispositif selon les revendications 1 et 2, **caractérisé en ce qu'**aux extrémités côté longeron (3) des arceaux de protection (43 ,44) sont montées des barres de couplage (49, 50), dont les autres extrémités sont articulées sur le longeron (3).

4. Dispositif selon la revendication 3, **caractérisé en ce que** les barres de couplage (49, 50) son reliées aux arceaux de protection (43 ,44) et au longeron (3) par l'intermédiaire d'articulations (51, 52, 53, 54) de type à cardan.

5. Dispositif selon la revendication1, **caractérisé en ce qu'**aux deuxième toupies à dents (28, 29) latérales et aux toupies à dents (34, 35) extérieures sont associés des arceaux de protection (55, 56 et 57, 58) séparés et rigides, qui sont mutuellement décalés en hauteur.

6. Dispositif selon la revendication1, **caractérisé en ce que** les deuxième toupies à dents (28, 29) latérales et les toupies à dents (34, 35) extérieures peuvent être relevées et immobilisées dans une position de transport,P sous des angles de pivotement différents.
